# EUROPEAN PATENT SPECIFICATION

(11) **EP 2 568 518 B1**
(45) Date of publication and mention of the grant of the patent: **29.03.2017**
(21) Application number: 12178835.0
(22) Date of filing: 01.08.2012
(51) Int. Cl.: H01M 2/04, H01M 2/34, H01M 2/30, H01M 2/22

(54) **Rechargeable battery**
Wiederaufladbare Batterie
Batterie rechargeable

(30) Priority: 06.09.2011 US 201161531499 P; 14.02.2012 US 201213396463
(43) Date of publication of application: 13.03.2013
(73) Proprietor: Samsung SDI Co., Ltd., Gyeonggi-do (KR); Robert Bosch GmbH, 70442 Stuttgart (DE)
(72) Inventor: Kim, Duk-Jung, Gyeonggi-do (KR)
(74) Representative: Gulde & Partner

(56) References cited:
- EP-A1- 2 333 871
- EP-A2- 1 076 350
- JP-A- H1 140 203
- US-A- 5 523 178
- US-A1- 2011 052 949

## Description

### FIELD OF THE INVENTION

The described technology relates generally to a rechargeable battery. More particularly, the described technology relates generally to a rechargeable battery having an improved terminal structure.

### Description of the Related Art

A rechargeable battery can be recharged and discharged unlike a primary battery that cannot be recharged. A rechargeable battery with low capacity is often used for a small portable electronic device such as a mobile phone, a laptop computer, and a camcorder, while a rechargeable battery with large capacity is typically used as a power source for driving a motor such as for a hybrid vehicle.

Recently, a large capacity high power rechargeable battery has been developed using a non-aqueous electrolyte with high energy density. The aforementioned rechargeable battery with large capacity is formed into a battery module with large capacity by coupling a plurality of these rechargeable batteries in series or in parallel in order to use them to drive a device, for example, a motor in an electric vehicle requiring a large amount of electric power.

A large capacity rechargeable battery is typically composed of a plurality of rechargeable batteries that are connected in series, and the rechargeable battery may be fabricated to have a cylindrical shape, a prismatic shape, and the like.

If pressure rises due to an abnormal reaction within the rechargeable battery having a case made of metal or the like, such a rechargeable battery may explode or ignite.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery having improved safety.

In order to prevent explosion or ignition, the rechargeable battery comprising an electrode assembly having a first electrode, a second electrode, and a separator interposed between the first and the second electrodes; a case accommodating the electrode assembly therein; a cap assembly attached to the case and including a cap plate; a first terminal extending through the cap plate and electrically connected to the first electrode; a lower insulating member provided below the cap plate, and a short-circuit member electrically connected to the second electrode, wherein the first terminal comprises first fixing portions electrically connected to the first electrode and wherein the short-circuit member is provided below a short-circuit hole formed in the cap plate. A battery or a cap assembly for a battery comprising a short-circuit member is disclosed in US 2011/052949 A1, US 5,523,178, EP 1 076 350 A2, JP 11-40203 and EP 2 333 871 A1. According to the invention, the short-circuit member is provided between the first terminal and the lower insulating member.

Preferably, the first terminal comprises a plate-shaped upper support portion, which comprises a first terminal hole through which a connecting terminal extends. Additionally or alternatively, the first terminal comprises a short-circuit protrusion protruding downward from the upper support portion through the cap plate.

An upper insulating member may be provided between the first terminal and the cap plate. The upper insulating member preferably comprises a plate-like portion; second upper insulation member holes for insertion of the first fixing portions; and second insulating protrusions formed around the second upper insulation member holes for insulating the first fixing portions from the cap plate. The upper insulating member may further comprise a first upper insulating member hole in which the short-circuit protrusion is inserted; and a first insulating protrusion formed between the short-circuit protrusion and the inner surface of the short-circuit hole. The first insulating protrusion may include two arcs spaced apart at a predetermined interval and the upper insulating member may further comprise a support portion intersecting the first upper insulating member hole, and buffer holes formed between the first insulating protrusion and the plate-like portion.

In one embodiment, a support plate is provided below the cap plate between a current collecting member and the lower insulating member. The support plate may comprise a first support plate hole below the location of the short-circuit member and second support plate holes for insertion of the first fixing portions and/or for riveting the first fixing portions to the support plate.

In one embodiment, the battery may further comprise a current collecting member, wherein the first fixing portions extend through the current collecting member and are riveted to the current collecting member.

The short-circuit member preferably communicates with the inside of the battery via the lower insulating member hole, a current collecting member hole formed in the current collecting member and/or the support plate hole.

The short-circuit member is preferably adapted to be deformed upwardly when the internal pressure in the battery rises above a first pressure level. Additionally or alternatively, the short-circuit member may comprise two distinct states: Firstly, the short-circuit member may be spaced apart from the first terminal at an internal pressure in the battery below a first pressure level and secondly, it may contact the first terminal above the first pressure level inside the battery thereby short-circuiting the first and second electrodes.

At an internal pressure in the battery above a first pressure level, the short-circuit member may contact a short-circuit protrusion protruding from the first terminal plate portion or from the connecting terminal of the first terminal.

The first fixing portions may extend through the cap plate and the lower insulating member from above.

The current collecting member may comprise an electrode connecting portion and a terminal connecting portion, wherein the terminal connecting portion is substantially parallel to the cap plate and comprises a hole and the short-circuit member is placed vertically above the hole.

The short-circuit member preferably comprises at least one of the following group of features: it is placed between the cap plate and the lower insulating member; it is press-fitted between the cap plate and the lower insulating member, and it is placed above a lower insulating member hole.

According to an exemplary embodiment, because a short-circuit protrusion is formed at the bottom or vertically below of a terminal, the positive electrode and the negative electrode can be easily short-circuited at a predetermined pressure without installing a separate member.

Moreover, the shape of the lower insulating member can be stably maintained since the fixing portions are formed on each of the terminals.

### BRIEF DESCRIPTION OF THE DRAWINGS

FIG. 1 is a perspective view illustrating a rechargeable battery according to a first exemplary embodiment of the present invention.
FIG. 2 is a cross-sectional view of the rechargeable battery taken along line II-II of FIG. 1.
FIG. 3 is an exploded perspective view illustrating part of the rechargeable battery according to the first exemplary embodiment of the present invention.
FIG. 4 is an exploded perspective view illustrating a second terminal, a connecting terminal, and an upper insulating member.
FIG. 5 is an exploded perspective view illustrating a rechargeable battery according to a second exemplary embodiment of the present invention.
FIG. 6 is a transverse cross-sectional view of the upper insulating member taken along line VI-VI of FIG. 5.
FIG. 7 is a cross-sectional view illustrating a rechargeable battery according to a third exemplary embodiment of the present invention.
FIG. 8 is a cross-sectional view illustrating a rechargeable battery according to a fourth exemplary embodiment of the present invention.
FIG. 9 is a partial cross-sectional view illustrating part of the rechargeable battery according to the fourth exemplary embodiment of the present invention.
FIG. 10 is a cross-sectional view illustrating a rechargeable battery according to a fifth exemplary embodiment of the present invention.

### DETAILED DESCRIPTION

Embodiments of the present invention will be described more fully hereinafter with reference to the accompanying drawings, in which exemplary embodiments of the invention are shown. As those skilled in the art would realize, the described embodiments may be modified in various different ways, all without departing from the scope of the present invention. In the specification and drawings, like reference numerals designate like elements.

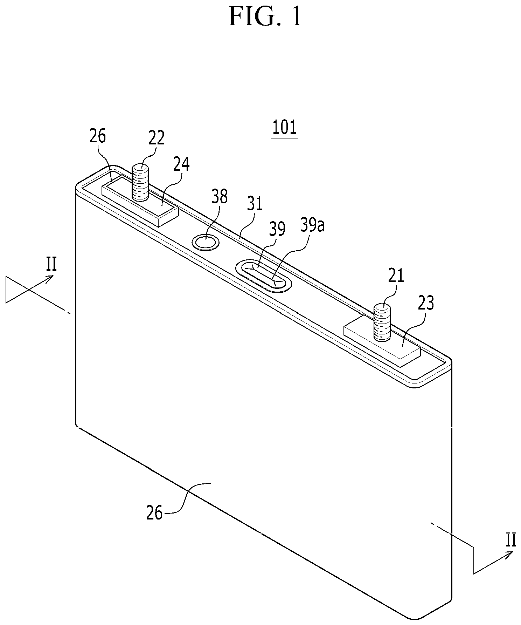

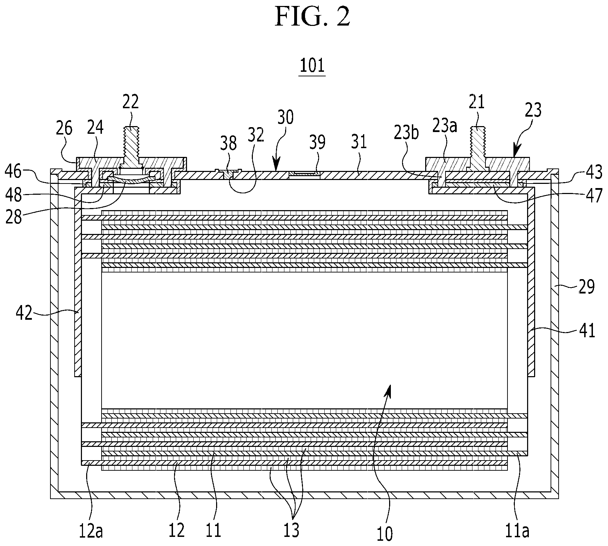

FIG. 1 is a perspective view illustrating a rechargeable battery according to an exemplary embodiment of the present invention, and FIG. 2 is a cross-sectional view of the rechargeable battery taken along line II-II of FIG. 1.

Referring to FIGS. 1 and 2, a rechargeable battery 100 according to a first exemplary embodiment includes an electrode assembly 10 that is spiral-wound by locating a separator 13 between a positive electrode 11 and a negative electrode 12, a case 29 that houses the electrode assembly 10, and a cap assembly 30 that is coupled to an opening of the case 29.

The rechargeable battery 100 according to the present exemplary embodiment is a lithium ion rechargeable battery and has a quadrangular shape. However, the present invention is not limited thereto, and the present invention can be applied to various forms of batteries such as a lithium polymer battery or a cylindrical battery.

The positive electrode 11 and the negative electrode 12 each include a coating region, which is a region that is coated with an active material, and uncoated regions 11 a and 12a, which are regions that are not coated with an active material, in a current collector that is formed with a thin plate of metal foil. The positive uncoated region 11 a is formed at one side end of the positive electrode 11 along a length direction of the positive electrode 11, and the negative uncoated region 12a is formed at the other side end of the negative electrode 12 along a length direction of the negative electrode 12. The positive electrode 11 and the negative electrode 12 are spiral-wound with a separator 13, which is an insulator, located therebetween.

However, the present invention is not limited thereto, and the electrode assembly 10 may be formed in a structure in which a positive electrode and a negative electrode that are formed with a plurality of sheets are alternately stacked with a separator located therebetween.

The case 29 is formed in a cuboid quadrangular shape having an opening at one side thereof. The case 29 may be formed of a metal such as aluminum, stainless steel, or the like.

The cap assembly 30 includes a cap plate 31 that covers the opening of the case 29, a second terminal 23 that protrudes to the outside of the cap plate 31 and is electrically connected to the positive electrode 11, and a first terminal 24 that protrudes to the outside of the cap plate 31 and is electrically connected to the negative electrode 12.

The cap plate 31 is formed as a thin plate extended in one direction, and is coupled to the opening of the case 29. A seal stopper 38 is installed in an electrolyte injection opening 32 of the cap plate 31, and a vent member 39 having a notch 39a adapted to fracture at a threshold pressure is installed in a vent hole.

The second terminal 23 and the first terminal 24 are installed to protrude above the cap plate 31.

That is, the second terminal 23 is electrically connected to the positive electrode 11 via a current collecting member 41, and the first terminal 24 is electrically connected to the negative electrode 12 via a current collecting member 42. However, the present invention is not limited thereto, and the second terminal 23 may be electrically connected a negative electrode, and the first terminal 24 may be electrically connected to a positive electrode.

The second terminal 23 includes an upper support portion 23a formed in a plate shape and fixing portions 23b protruding downward from the upper support portion 23a. The fixing portions 23b are used to electrically connect the second terminal 23 to the positive electrode 11. This is achieved by providing them in electrical contact, preferably in direct physical contact with a current collecting member 41.

The upper support portion 23a has two fixing portions. The fixing portions 23b are formed in a column-like shape, and pass through the cap plate 30 and protruded downward. However, the present invention is not limited thereto, and two or more fixing portions 23b may be formed.

A column-like connecting terminal 21 protruding upward from the second terminal 23 is inserted into the second terminal 23. The connecting terminal 21 may be made of stainless steel having high strength. The connecting terminal 21 is connected to a bus bar when forming an electrode module by electrically connecting rechargeable batteries.

The second terminal 23 is disposed to be in direct contact with the cap plate 31, and accordingly the cap plate 31 is positively charged.

A support plate 47 is installed under the cap plate 31, and a lower insulating member 43 disposed between the support plate 47 and the cap plate 31 is installed on the support plate 47. The lower insulating member 43 is installed to cover the top parts of the support plate 47 and current collecting member 41. The fixing portions 23b pass through the support plate 47 and the lower insulating member 43 and are riveted to the support plate 47. The fixing portions 23b, being inserted into holes, are fixed to the support plate 47 as the lower ends are widely spread. The fixing portions 23b may be fixed to the support plate 47 by welding.

The current collecting member 41 is fixed to the support plate 47 by welding or the like, and electric current is transferred to the second terminal 23 through the support plate 47. As shown in the present exemplary embodiment, when a plurality of fixing portions 23b are formed in the second terminal 23, which pass through the cap plate 31 and are riveted to the support plate 47, this prevents the side edges or rather the outer circumference of the top surface of the lower insulating member 43 from being spaced apart from the cap plate 31. Moreover, as the support plate 47 is fixed by the fixing portions 23b, the support plate 47 can be prevented from being shaken from external impact or vibration.

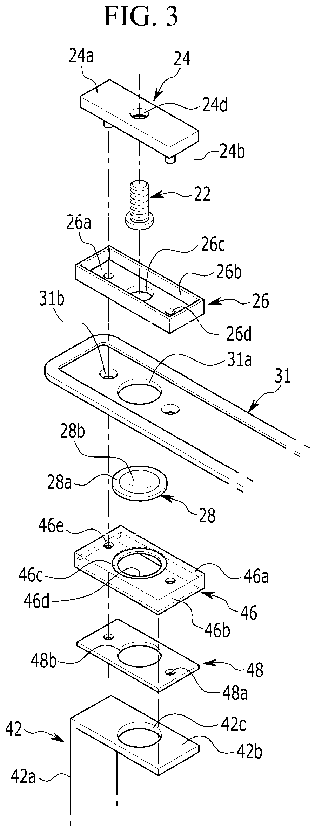

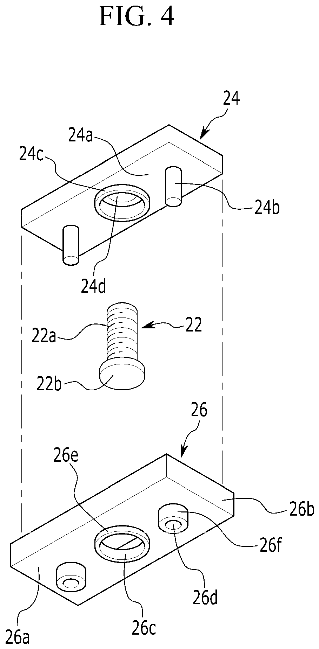

FIG. 3 is an exploded perspective view illustrating part of the rechargeable battery according to the first exemplary embodiment of the present invention, and FIG. 4 is an exploded perspective view illustrating a first terminal, a connecting terminal, and an upper insulating member.

As shown in FIG. 3 and FIG. 4, the first terminal 24 includes an upper support portion 24a formed in a plate shape and fixing portions 24b protruding downward from the upper support portion 24a. The fixing portions 24 are used electrically connect the first terminal 24 with the negative electrode 12. This is achieved by providing them in contact, preferably in direct physical contact with a current collecting member 42. The upper support portion 24a has a hole 24d in which the connecting terminal 22 is inserted, and a short-circuit protrusion 24c penetrating through a short-circuit hole 31 a formed in the cap plate 31 is formed around the hole 24d.

The connecting terminal is insertedly installed in the hole 24d. The connecting terminal 22 includes a terminal column 22a protruding outward from the first terminal 24 and a flange portion 22b installed at the bottom end of the terminal column 22a. The flange portion 22b is inserted in a recess formed around the hole 24d and fixed to the bottom of the first terminal 24 by welding or the like.

The fixing portions 24b are formed in a column shape, and pass through the cap plate 31 and protrude downward. Two fixing portions 24b are disposed on the upper support portion 24a, spaced apart from each other, in a lengthwise direction of the upper support portion 24a. However, the present invention is not limited thereto, and the upper support portion 24a may have two or more fixing portions.

An upper insulating member 26 is installed between the upper support portion 24a and the cap plate 31. The upper insulating member 26 includes a plate portion 26a and a sidewall 26b that extends along the side edges of the plate portion 26a, protrudes, and encloses the side edges of the upper support portion 24a. A hole 26c in which the short-circuit protrusion 24c is inserted is formed in the plate portion 26a, and a first insulating protrusion 26e disposed between the short-circuit protrusion 24c and the inner surface of the short-circuit hole 31 a protrudes downward around the hole 26c.

Holes 26d in which the fixing portions 24b are respectively inserted are formed in the plate portion 26a, and second insulating protrusions 26f protruding downward and insulating between the fixing portions 24b and the cap plate 31 are respectively formed around the holes 26d.

The short-circuit hole 31 a in which the short-circuit protrusion 24c is inserted and holes 31 b in which the fixing portions 24b are respectively inserted are formed in the cap plate 31. A short-circuit member 28 deformed at a set pressure and connected to the short-circuit protrusion 24c is installed under the short-circuit hole 31 a.

The short-circuit member 28 is electrically connected to the cap plate 31 and electrically connected to the positive electrode 11. When the internal pressure of the rechargeable battery 101 rises, the short-circuit 28 is deformed and connected to the short-circuit protrusion 24c.

The short-circuit member 28 is formed in a circular plate shape, and includes a peripheral portion 28a and a curved portion 28b formed inside the peripheral portion 28a and curved downward in an arc shape. The peripheral portion 28a is disposed between the cap plate 31 and the lower insulating member 46. Thus, the short-circuit member 28 can be fixedly installed between the lower insulating member 46 and the cap plate 31 by press-fitting. Therefore, welding is not necessary. Moreover, any physical fixation of the short-circuit member 28 to the cap plate 31 is not necessary.

The support plate 48 and the lower insulating member 46 are installed under the cap plate 31. The support plate 48 is formed of a metal plate having conductivity, and has holes 48a in which the fixing portions 24b are respectively inserted. A hole 48b positioned under the short-circuit member 28 is formed in the support plate 48.

The lower insulating member 46 is disposed between the support plate 48 and the cap plate 31, and is installed to cover the top parts of the support plate 48 and current collecting member 42. The lower insulating member 46 includes a plate portion 46a and a sidewall 46b that extends along the side edges of the plate portion 46a and protrudes downward. A hole 46d positioned under the short-circuit member is formed in the plate portion 46a, and a recess 46c in which the short-circuit member 28 is inserted is formed around the hole 46d. Holes 46e in which the fixing portions are respectively inserted are formed in the plate portion 46a.

The current collecting member 42 includes an electrode connecting portion 42a electrically connected to the negative electrode 12 of the electrode assembly 10 and a terminal connecting portion 42b bent from the electrode connecting portion 42a and brought into contact with the support plate 48. A hole 42c communicating with the holes 46d and 48c is formed in the terminal connecting portion 42b. The short-circuit member 28 is placed vertically above the hole 42c and communicates with the hole 42c. In other words, a straight line connecting the first terminal 24 and the terminal connecting portion 42b at the location of the hole 42c intersect the short-circuit member 28. Accordingly, the pressure in the case 29 can be easily transferred to the short-circuit member 28 through the holes 46d, 48c, and 42c.

In this manner, according to the present exemplary embodiment, the short-circuit member 28 and the first terminal 24 are in electrical contact with each other through the short-circuit protrusion 24c formed on the first terminal 24. Thus, when the pressure rises, the positive electrode and the negative electrode can be easily short-circuited without installing a short-circuit tab.

The fixing portions 24b pass through the lower insulating member 46 and the support plate 48 and are riveted to the support plate 48. The fixing portions 24b, being inserted into the holes 48a, are fixed to the support plate 48 as the lower ends are widely spread. The fixing portions 24b may be fixed to the support plate 48 by welding, being riveted thereto.

The terminal connecting portion 42b is fixed to the support plate 48 by welding or the like, and electric current is transferred to the first terminal 24 through the support plate 48.

As shown in the present exemplary embodiment, when a plurality of fixing portions 24b are formed in the first terminal 24, which pass through the cap plate 31 and are riveted to the support plate 48, this prevents the side edges or rather the outer circumference of the top surface of the lower insulating member 46 from being spaced apart from the cap plate 31. Moreover, as the current collecting member 42 is fixedly installed on the support plate 48 being fixed by the fixing portions 24b, the support plate 48 can be prevented from being shaken from external impact or vibration.

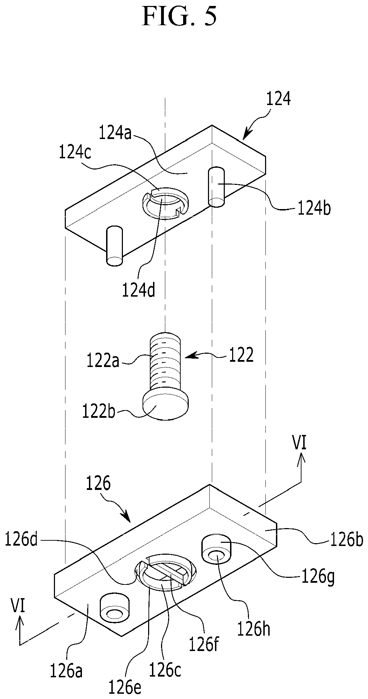

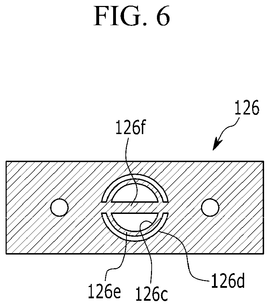

FIG. 5 is an exploded perspective view illustrating a first terminal and an upper insulating member according to a second exemplary embodiment of the present invention, and FIG. 6 is a transverse cross-sectional view of the upper insulating member taken along line VI-VI of FIG. 5.

Referring to FIG. 5 and FIG. 6, the rechargeable battery according to the present exemplary embodiment may have the same structure as the rechargeable battery according to the first exemplary embodiment as described above, except for the structure of the first terminal 125 and the upper insulating member 126, so a repeated description of the same structure will be omitted.

The first terminal 124 includes an upper support portion 124a formed in a plate shape and fixing portions 124b protruding downward from the upper support portion 124a. The upper support portion 124a has a hole 124d in which a connecting terminal 122 is inserted, and a short-circuit protrusion 124c penetrating through a short-circuit hole 31 a formed in the cap plate 31 is formed around the hole 124d. The short-circuit protrusion 124c includes two protrusions each having an arc shape, and the two protrusions are disposed facing each other, spaced apart at a predetermined interval.

The connecting terminal is insertedly installed in the hole 124d. The connecting terminal 122 includes a terminal column 22a protruding outward from the first terminal 124 and a flange portion 122b installed at the bottom end of the terminal column 122a. The flange portion 122b is inserted in a recess formed around the hole 124d and fixed to the bottom of the first terminal 124 by welding or the like.

The fixing portions 124b are formed in a column shape, and pass through the cap plate 30 and protruded downward. Two fixing portions 124b are formed on the upper support portion 124a.

An upper insulating member 126 is installed between the upper support portion 124a and the cap plate 31. The upper insulating member 126 includes a plate portion 126a and a sidewall 126b that extends along the side edges of the plate portion 126a and encloses the side edges of the upper support portion 124a. A first insulating protrusion 126e disposed between the short-circuit protrusion 124c and the cap plate 31 and second insulating protrusions 126g enclosing the fixing portions 124b are formed on the plate portion 126a. Holes 126d in which the fixing portions are inserted are respectively formed inside the second insulating protrusions 126g.

The first insulating protrusion 126e includes two arcs spaced apart at a predetermined interval. A hole 126c in which the short-circuit protrusion 124c is inserted is formed inside the first insulating protrusion 126e, and a support portion 126f intersecting the hole 126c is formed across the hole 126c. Buffer holes 126d are formed between the first insulating protrusion 126e and the plate portion 126a. Accordingly, the first insulating protrusion 126e is spaced apart from the plate portion 126a, and both ends of the first insulating protrusion 126e are fixed to the support portion 126f.

As shown in the present exemplary embodiment, once the support portion 126f is formed, the bottom end of the connecting terminal 122 is brought into contact with the support portion 126f. Hence, the connecting terminal 122 and the first terminal 124 can be kept coupled together stably.

Moreover, as the buffer holes 126d are formed between the first insulating protrusion 126e and the plate portion 126a, the first insulating protrusion 126e can be easily deformed in a width direction. Thus, the first insulating protrusion 126e can be easily positioned between the short-circuit protrusion 124c and the cap plate 31.

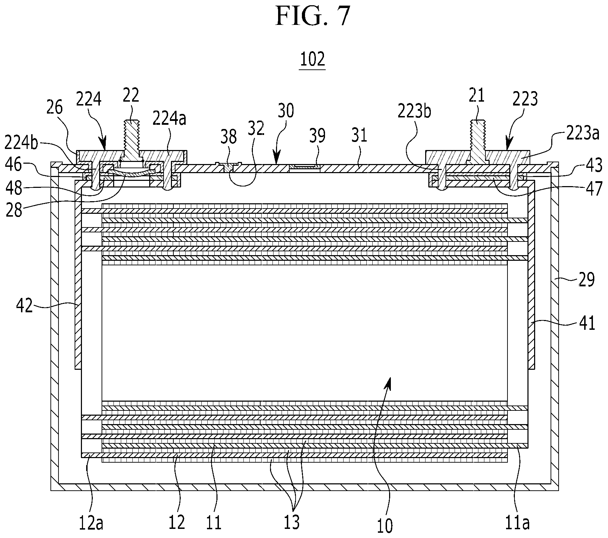

FIG. 7 is a cross-sectional view illustrating a rechargeable battery according to a third exemplary embodiment of the present invention.

Referring to FIG. 7, the rechargeable battery according to the present exemplary embodiment may have the same structure as the rechargeable battery according to the first exemplary embodiment as described above, except for the structure of the first terminal 224 and the upper insulating member 26, so a repeated description of the same structure will be omitted.

The rechargeable battery 102 according to the present exemplary embodiment has a cap assembly 230 including a cap plate 231, a second terminal 223, and a first terminal 224.

The second terminal 223 has a plate portion 223a and fixing portions 223b protruding downward from the plate portion 223a. The fixing portions 223b are installed to pass through the cap plate 231, the lower insulating member 43, the support plate 47, and the current collecting member 41, and are riveted to the current collecting member 41. A plurality of fixing portions 223b are formed on the second terminal 223, and the fixing portions 223b are fixed to the current collecting member 41 by welding, being riveted to the current collecting member 41.

The first terminal 224 has a plate portion 224a and fixing portions 224b protruding downward from the plate portion 224a. The fixing portions 224b are installed to pass through the upper insulating member 26, the cap plate 231, the lower insulating member 46, the support plate 48, and the current collecting member 42, and are riveted to the current collecting member 42. A plurality of fixing portions 224b are formed on the first terminal 224, and the fixing portions 224b are fixed to the current collecting member 42 by welding, being riveted to the current collecting member 42.

In this manner, according to the present exemplary embodiment, the fixing portions 223b and 224b formed on the second terminal 223 and the first terminal 224 pass through the current collecting members 41 and 42, and are riveted to the current collecting members 41 and 42. Hence, the coupling between the terminals 223 and 224 and the support plates 47 and 48 becomes stronger.

Since the fixing portions 223b and 224b are fixed to the current colleting members 41 and 42, the structure of the battery could also be stably formed without the support plate 48 in Fig. 7. The support plate 48 in Fig. 7 is an optional feature.

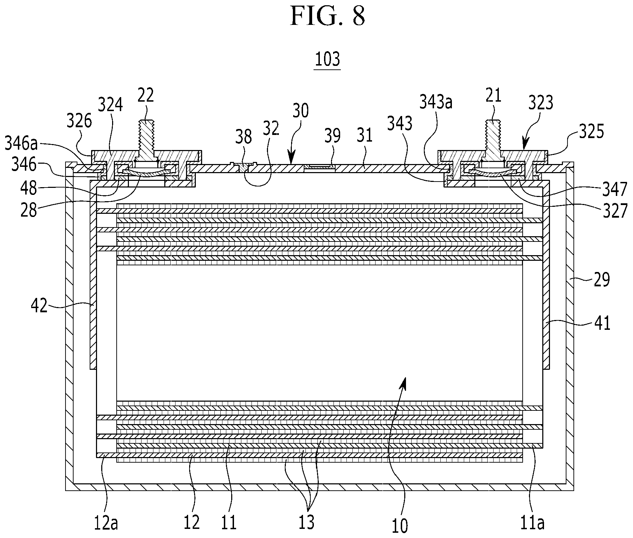

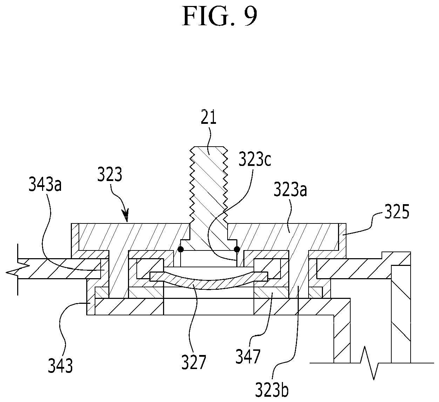

FIG. 8 is a cross-sectional view illustrating a rechargeable battery according to a fourth exemplary embodiment of the present invention, and FIG. 9 is a partial cross-sectional view illustrating part of the rechargeable battery according to the fourth exemplary embodiment of the present invention.

Referring to FIG. 8 and FIG. 9, the rechargeable battery according to the present exemplary embodiment may have the same structure as the rechargeable battery according to the first exemplary embodiment as described above, except for the structure of the cap assembly 330, so a repeated description of the same structure will be omitted.

The cap assembly 330 includes a cap plate 331 that covers the opening of the case 29, a second terminal 323 that protrudes to the outside of the cap plate 31 and is electrically connected to the positive electrode 11, and a first terminal 324 that protrudes to the outside of the cap plate 331 and is electrically connected to the negative electrode 12.

That is, the second terminal 323 is electrically connected to the positive electrode 11 via a current collecting member 41, and the first terminal 324 is electrically connected to the negative electrode 12 via a current collecting member 42.

The second terminal 323 includes an upper support portion 323a formed in a plate shape and fixing portions 323b protruding downward from the upper support portion 323a. A connecting terminal 21 is insertedly installed in the upper support portion 323a, and a short-circuit protrusion 323c passing through the terminal hole formed in the cap plate 331 is formed on the lower surface of the upper support portion 323a.

The fixing portions 323b are formed in a column-like shape, and pass through the cap plate 30 and protruded downward. Two fixing portions are formed on the upper support portion 323a

An upper insulating member 325 is installed between the upper support portion 323a and the cap plate 331. The upper insulating member 325 includes a plate portion and a sidewall that extends along the side edges of the plate portion, protrudes, and encloses the side edges of the upper support portion. A hole in which the short-circuit protrusion is inserted is formed in the plate portion, and a first insulating protrusion disposed between the short-circuit protrusion 323c and the cap plate 331 protrudes downward around the hole.

A short-circuit hole in which the short-circuit protrusion 323c is inserted and holes in which the fixing portions are inserted are formed in the cap plate 331. A short-circuit member 327 deformed at a set pressure and connected to the short-circuit protrusion 323c is installed under the short-circuit hole. The short-circuit member 327 has the same structure as the short-circuit member 327 according to the first exemplary embodiment.

A support plate 347 is installed under the cap plate 331, and a lower insulating member 343 disposed between the support plate 347 and the cap plate 331 is installed on the support plate 347. The support plate 347 is formed of a metal plate having conductivity, and has holes in which the fixing portions are respectively inserted. A hole positioned under the short-circuit member is formed in the support plate.

The lower insulating member 343 is installed to cover the top parts of the support plate and current collecting member. The lower insulating member includes a plate portion and a sidewall that protrudes downward along the side edges of the plate portion. A hole positioned under the short-circuit member and holes in which the fixing portions are inserted are formed in the plate portion. Second insulating protrusions 343a protruding upward and installed between the fixing portions 323b and the cap plate 331 to insulate between the fixing portions 323b and the cap plate 331 are respectively formed around the holes.

The fixing portions 323b pass through the lower insulating member 343 and the lower insulating member 347 and are riveted to the support plate 347. The fixing portions 323b, being inserted into the holes of the support plate 347, are fixed to the support plate 347 as the lower ends are widely spread. The fixing portions 323b may be fixed to the support plate 347 by welding, being riveted thereto.

The first terminal 324 has a plate portion, fixing portions, and a short-circuit protrusion, and has the same structure as the first terminal according to the first exemplary embodiment. The connecting terminal 22 is insertedly installed the first terminal 324.

The upper insulating member 326 is installed between the upper support portion of the first terminal 324 and the cap plate 331. The upper insulating member 326 includes a plate portion and a sidewall that protrudes along the side edges of the plate portion and encloses the side edges of the upper support portion. A hole in which the short-circuit protrusion is inserted is formed in the plate portion, and a first insulating protrusion disposed between the short-circuit protrusion and the cap plate protrudes downward around the hole.

A short-circuit hole in which the short-circuit protrusion is inserted and holes in which the fixing portions are inserted are formed in the cap plate 331. A short-circuit member 28 deformed at a set pressure and connected to the short-circuit protrusion is installed under the short-circuit hole.

The short-circuit member 28 has the same structure as the short-circuit member according to the first exemplary embodiment.

A support plate 48 is disposed under the cap plate 331, and a lower insulating member 346 is installed between the support plate 48 and the cap plate. The support plate 48 is formed of a metal plate having conductivity, and has holes in which the fixing portions are respectively inserted. A hole positioned under the short-circuit member is formed in the support plate 48.

The lower insulating member 346 is installed to cover the top parts of the support plate 48 and current collecting member 42. The lower insulating member 343 is installed to cover the top parts of the support plate and current collecting member. The upper insulating member includes a plate portion and a sidewall that extends along the side edges of the plate portion and protrudes downward.

A hole positioned under the short-circuit member 28 and holes in which the fixing portions are inserted are formed in the plate portion. Second insulating protrusions 346a protruding upward and installed between the fixing portions and the cap plate to insulate between the fixing portions and the cap plate are respectively formed around the holes. The fixing portions pass through the support plate and the lower insulating member 346 and are riveted to the support plate.

In this manner, according to the present exemplary embodiment, the short-circuit members 28 and 327 are respectively installed on the second terminal 323 and the first terminal 324, and the cap plate 331 has electrical neutrality. Therefore, the cap plate 331 or the case 29 can be prevented from being positively charged and oxidized.

Moreover, the support plates 48 and 347 are respectively installed on the bottom parts of the positive electrode 323 and negative electrode 324, and the support plates 48 and 347 are fixed by the fixing portions. This prevents the side edges or rather the outer circumference of the top surfaces of the lower insulating members 343 and 346 from being spaced apart from the cap plate 331.

When the internal pressure of the rechargeable battery 103 rises, the short-circuit members 28 and 327 installed on the second terminal 323 and the first terminal 324 are deformed, thereby causing the short-circuit member 327 to be electrically connected to the second terminal 323 and the short-circuit member 28 to be electrically connected to the first terminal 324. Therefore, the second terminal 323 and the first terminal 324 are electrically short-circuited by the short-circuit members 28 and 327 connected to the cap plate 331.

When short-circuiting occurs, current charged in the rechargeable battery 103 is discharged and the rechargeable battery 103 is no longer charged and discharged. This can prevent the rechargeable battery 103 from being exploded or ignited due to a rise in the internal pressure of the rechargeable battery 103.

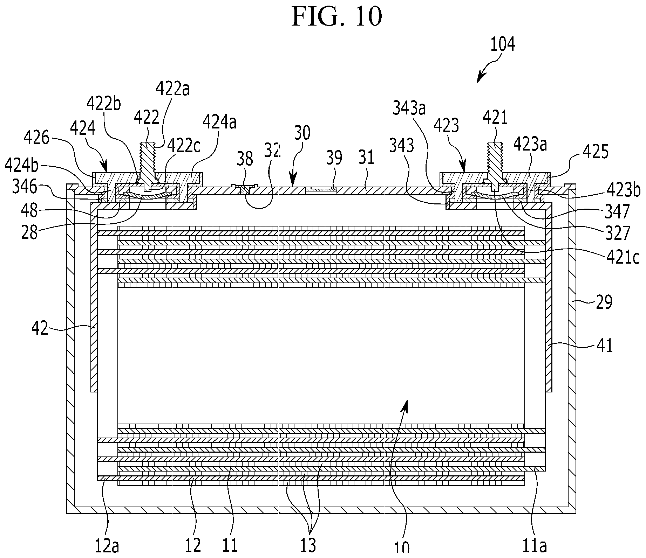

FIG. 10 is a cross-sectional view illustrating a rechargeable battery according to a fifth exemplary embodiment of the present invention.

The rechargeable battery according to the present exemplary embodiment may have the same structure as the rechargeable battery according to the fourth exemplary embodiment as described above, except for the structure of the cap assembly, so a repeated description of the same structure will be omitted.

The rechargeable battery 104 according to the present exemplary embodiment may have the same structure as the rechargeable battery according to the first exemplary embodiment as described above, except for the structure of the cap assembly 430, so a repeated description of the same structure will be omitted.

The cap assembly 430 includes a cap plate 431 that covers the opening of the case 29, a second terminal 23 that protrudes to the outside of the cap plate 431 and is electrically connected to the positive electrode 11, and a first terminal 424 that protrudes to the outside of the cap plate 431 and is electrically connected to the negative electrode 12.

That is, the second terminal 423 is electrically connected to the positive electrode 11 via a current collecting member 41, and the first terminal 424 is electrically connected to the negative electrode 12 via a current collecting member 42.

The second terminal 423 includes an upper support portion 423a formed in a plate shape and fixing portions 423b protruding downward from the upper support portion 423b. A connecting terminal 422 is inserted into the upper support portion 423a.

The fixing portions 423b having a column-like shape pass through the cap plate 431 and protrude downward. Two fixing portions 423b spaced apart in a lengthwise direction of the support plate portion 423a are formed in the upper support portion 423a.

The connecting terminal 421 includes a terminal flange 421 b, a terminal column 421 a protruding upward from the terminal flange 421 b, and a short-circuit protrusion 421 c protruding downward from the lower surface of the terminal flange 421 b.

An upper insulating member 425 is installed between the upper support portion 423a and the cap plate 431. The upper insulating member 425 includes a plate portion and a sidewall that extends along the side edges of the plate portion, protrudes, and encloses the side edges of the upper support portion. A hole in which the short-circuit protrusion is inserted and holes in which the fixing portions are inserted are formed in the plate portion.

A short-circuit member 327 deformed at a set pressure and brought into contact with the short-circuit protrusion 421c is installed on the cap plate 431. The short-circuit member 327 has the same structure as the short-circuit member according to the first exemplary embodiment.

A support plate 347 is installed under the cap plate 431, and a lower insulating member 343 is installed between the support plate 347 and the cap plate 331. The support plate 347 and the lower insulating member 343 have the same structure as the support plate and the lower insulating member according to the fourth exemplary embodiment.

The first terminal 424 includes an upper support portion 424a formed in a plate shape and fixing portions 424b protruding downward from the upper support portion 424a. A connecting terminal is insertedly installed on the upper support portion 424a.

The fixing portions 424b having a column-like shape pass through the cap plate 431 and protrude downward. Two fixing portions 424b spaced apart in a lengthwise direction of the support plate portion 424a are formed in the upper support portion 424a.

The connecting terminal 422 includes a terminal flange 422b, a terminal column 422a protruding upward from the terminal flange 422b, and a short-circuit protrusion 422c protruding downward from the lower surface of the terminal flange 422b.

An upper insulating member 426 is installed between the upper support portion 424a and the cap plate 431. The upper insulating member 426 includes a plate portion and a sidewall that extends along the side edges of the plate portion, protrudes, and encloses the side edges of the upper support portion 424a. A hole in which the short-circuit protrusion is inserted and holes in which the fixing portions are inserted are formed in the plate portion.

A short-circuit member 28 deformed at a set pressure and brought into contact with the short-circuit protrusion 422c is installed on the cap plate 431. The short-circuit member 28 has the same structure as the short-circuit member according to the first exemplary embodiment.

A support plate 48 is installed under the cap plate 431, and a lower insulating member 346 is installed between the support plate 48 and the cap plate 431. The support plate 48 and the lower insulating member 346 have the same structure as the support plate and the lower insulating member according to the fourth exemplary embodiment.

In this manner, according to the present exemplary embodiment, short-circuit protrusions 421 c and 422c are respectively formed on the connecting terminals 421 and 422. Thus, there is no need to form an insulating portion between the cap plate 431 and the short-circuit protrusions 421 and 422c. Moreover, the connecting terminals 421 and 422 and the short-circuit members 28 and 327 are electrically connected due to the deformation of the short-circuit members 28 and 327. Thus, when the internal pressure of the rechargeable battery 104 rises, this induces short circuiting, thereby preventing explosion and ignition of the rechargeable battery 104.

## Claims

1. A rechargeable battery (101) comprising:
an electrode assembly (10) having a first electrode (12), a second electrode (11), and a separator (13) interposed between the first and the second electrodes (12, 11);
a case (29) accommodating the electrode assembly (10) therein;
a cap assembly (30) attached to the case (29) and including a cap plate (31);
a first terminal (24) extending through the cap plate (31) and electrically connected to the first electrode (12);
a lower insulating member (46) provided below the cap plate (31); and
a short-circuit member (28) electrically connected to the second electrode (11);
wherein the first terminal (24) comprises first fixing portions (24b) electrically connected to the first electrode (12); and wherein
the short-circuit member (28) is provided below a short-circuit hole (31 a) formed in the cap plate (31),
**characterized in that**
the short-circuit member (28) is provided between the first terminal (24) and the lower insulating member (46).

2. The battery of claim 1, wherein the first terminal (24) comprises a plate-shaped upper support portion (24a) which comprises:
a first terminal hole (24d) through which a connecting terminal (22) extends, and/or
a short-circuit protrusion (24c) protruding downward from the upper support portion (24a) through the cap plate (31).

3. The battery of one of the previous claims, wherein an upper insulating member (26) is provided between the first terminal (24) and the cap plate (31).

4. The battery of claim 3, wherein the upper insulating member (26) comprises:
a plate-like portion (26a);
second upper insulation member holes (26d) for insertion of the first fixing portions (24b); and
second insulating protrusions (26f) formed around the second upper insulation member holes (26d) for insulating the first fixing portions (24b) from the cap plate (31).

5. The battery of claims (3 and 2) or of claims (4 and 2), wherein the upper insulating member (26) comprises:
a first upper insulating member hole (26c) in which the short-circuit protrusion (24c) is inserted; and
a first insulating protrusion (26e) formed between the short-circuit protrusion (24c) and the inner surface of the short-circuit hole (31 a).

6. The battery of claim 5, wherein the first insulating protrusion (126e) includes two arcs spaced apart at a predetermined interval and the upper insulating member (126) further comprises:
a support portion (126f) intersecting the first upper insulating member hole (126c), and
buffer holes (126d) formed between the first insulating protrusion (126e) and the plate-like portion (126a).

7. The battery of any of the previous claims, wherein a support plate (48) is provided below the cap plate (31) between a current collecting member (42) and the lower insulating member (46).

8. The battery of claim 7, wherein the support plate (48) comprising a first support plate hole (48b) below the location of the short-circuit member (28) and second support plate holes (48a) for insertion of the first fixing portions (24b) and/or for riveting the first fixing portions (24b) to the support plate (48).

9. The battery of any of the previous claims 1-6, further comprising a current collecting member (42), wherein the first fixing portions (224b) extend through the current collecting member (42) and are riveted to the current collecting member (42).

10. The battery of any of claims 7 to 9, wherein the short-circuit member (28) communicates with the inside of the battery (101) via the lower insulating member hole (46d), a current collecting member hole (42c) formed in the current collecting member (42) and/or the support plate hole (48c).

11. The battery of any of the previous claims, wherein short-circuit member (28) is:
adapted to be deformed upwardly when the internal pressure in the battery (101) rises above a first pressure level, and/or
spaced apart from the first terminal (24) at an internal pressure in the battery (101) below a first pressure level and contacts the first terminal (24) above the first pressure level inside the battery (101) thereby short-circuiting the first and second electrodes (11, 12).

12. The battery of any of claims 2 to 10, wherein at an internal pressure in the battery (101) above a first pressure level the short-circuit member (28) contacts the short-circuit protrusion (24c) protruding from the first terminal plate portion (24a) or from the connecting terminal (422) of the first terminal (422).

13. The battery of any of the previous claims, wherein the first fixing portions (24b) are extending through the cap plate (31) and the lower insulating member (46) from above.

14. The battery of any of the previous claims, wherein the current collecting member (42) comprises a electrode connecting portion (42a) and a terminal connecting portion (42b), wherein the terminal connecting portion (42b) is substantially parallel to the cap plate (31) and comprises a hole (42c) and the short-circuit member (28) is placed vertically above the hole (42c).

15. The battery of any of the previous claims, wherein the short-circuit member (28) comprises at least one of the following group of features:
is placed between the cap plate (31) and the lower insulating member (46),
is press-fitted between the cap plate (31) and the lower insulating member (46), and
is placed above a lower insulating member hole (46d).

## Patentansprüche

1. Eine wiederaufladbare Batterie (101), umfassend:
eine Elektrodenanordnung (10), die eine erste Elektrode (12), eine zweite Elektrode (11) und einen zwischen der ersten und der zweiten Elektrode (12, 11) angeordneten Separator (13) aufweist;
ein Gehäuse (29), das die Elektrodenanordnung (10) in sich aufnimmt;
eine Deckelanordnung (30), die an dem Gehäuse (29) angebracht ist und eine Deckelplatte (31) umfasst;
einen ersten Anschluss (24), der sich durch die Deckelplatte (31) erstreckt und mit der ersten Elektrode (12) elektrisch verbunden ist;
ein unteres Isolierelement (46), das unterhalb der Deckelplatte (31) vorgesehen ist; und
ein Kurzschlusselement (28), das mit der zweiten Elektrode (11) elektrisch verbunden ist;
wobei der erste Anschluss (24) erste Fixierungsabschnitte (24b) aufweist, die mit der ersten Elektrode (12) elektrisch verbunden sind; und wobei das Kurzschlusselement (28) unterhalb eines Kurzschlusslochs (31a) vorgesehen ist, das in der Deckelplatte (31) ausgebildet ist,
**dadurch gekennzeichnet, dass**
das Kurzschlusselement (28) zwischen dem ersten Anschluss (24) und dem unteren Isolierelement (46) vorgesehen ist.

2. Die Batterie nach Anspruch 1, wobei der erste Anschluss (24) einen plattenförmigen oberen Trägerabschnitt (24a) aufweist, der umfasst:
ein erstes Anschlussloch (24d), durch das sich ein Verbindungsanschluss (22) erstreckt, und/oder
einen Kurzschlussvorsprung (24c), der von dem oberen Trägerabschnitt (24a) aus durch die Deckelplatte (31) nach unten vorsteht.

3. Die Batterie nach einem der vorangehenden Ansprüche, wobei zwischen dem ersten Anschluss (24) und der Deckelplatte (31) ein oberes Isolierelement (26) vorgesehen ist.

4. Die Batterie nach Anspruch 3, wobei das obere Isolierelement (26) aufweist:
einen plattenartigen Abschnitt (26a);
zweite obere Isolierelementlöcher (26d) zum Einsetzen der ersten Fixierungsabschnitte (24b); und
zweite Isoliervorsprünge (26f), die um die zweiten oberen Isolierelementlöcher (26d) herum ausgebildet sind, um die ersten Fixierungsabschnitte (24b) von der Deckelplatte (31) zu isolieren.

5. Die Batterie nach den Ansprüchen (3 und 2) oder den Ansprüchen (4 und 2), wobei das obere Isolierelement (26) aufweist:
ein erstes oberes Isolierelementloch (26c), in das der Kurzschlussvorsprung (24c) eingesetzt ist; und
einen ersten Isoliervorsprung (26e), der zwischen dem Kurzschlussvorsprung (24c) und der Innenfläche des Kurzschlusslochs (31a) ausgebildet ist.

6. Die Batterie nach Anspruch 5, wobei der erste Isoliervorsprung (126e) zwei Bögen aufweist, die mit einem vorgegebenen Abstand räumlich voneinander getrennt sind, und das obere Isolierelement (126) ferner aufweist:
einen Trägerabschnitt (126f), der das erste obere Isolierelementloch (126c) kreuzt, und
Pufferlöcher (126d), die zwischen dem ersten Isoliervorsprung (126e) und dem plattenartigen Abschnitt (126a) ausgebildet sind.

7. Die Batterie nach einem der vorangehenden Ansprüche, wobei unterhalb der Deckelplatte (31), zwischen einem Stromabnehmerelement (42) und dem unteren Isolierelement (46), eine Trägerplatte (48) vorgesehen ist.

8. Die Batterie nach Anspruch 7, wobei die Trägerplatte (48) ein erstes Trägerplattenloch (48b) unterhalb der Position des Kurzschlusselements (28) und zweite Trägerplattenlöcher (48a) zum Einsetzen der ersten Fixierungsabschnitte (24b) und/oder zum Nieten der ersten Fixierungsabschnitte (24b) an die Trägerplatte (48) aufweist.

9. Die Batterie nach einem der vorangehenden Ansprüche 1-6, die ferner ein Stromabnehmerelement (42) aufweist, wobei die ersten Fixierungsabschnitte (224b) sich durch das Stromabnehmerelement (42) hindurch erstrecken und an das Stromabnehmerelement (42) genietet sind.

10. Die Batterie nach einem der Ansprüche 7 bis 9, wobei das Kurzschlusselement (28) über das untere Isolierelementloch (46d), ein Stromabnehmerelementloch (42c), das in dem Stromabnehmerelement (42) ausgebildet ist, und/oder das Trägerplattenloch (48c) mit dem Inneren der Batterie (101) in Verbindung steht.

11. Die Batterie nach einem der vorangehenden Ansprüche, wobei das Kurzschlusselement (28):
dazu ausgelegt ist, nach oben verformt zu werden, wenn der Innendruck in der Batterie (101) über ein erstes Druckniveau steigt, und/oder
bei einem Innendruck in der Batterie (101) unterhalb eines ersten Druckniveaus von dem ersten Anschluss (24) räumlich getrennt ist und oberhalb des ersten Druckniveaus im Inneren der Batterie (101) den ersten Anschluss (24) kontaktiert und dadurch die erste und zweite Elektrode (11, 12) kurzschließt.

12. Die Batterie nach einem der Ansprüche 2 bis 10, wobei bei einem Innendruck in der Batterie (101) oberhalb eines ersten Druckniveaus das Kurzschlusselement (28) den Kurzschlussvorsprung (24c) kontaktiert, der von dem ersten Anschlussplattenabschnitt (24a) oder von dem Verbindungsanschluss (422) des ersten Anschlusses (422) aus vorsteht, kontaktiert.

13. Die Batterie nach einem der vorangehenden Ansprüche, wobei die ersten Fixierungsabschnitte (24b) sich von oben durch die Deckelplatte (31) und das untere Isolierelement (46) erstrecken.

14. Die Batterie nach einem der vorangehenden Ansprüche, wobei das Stromabnehmerelement (42) einen Elektrodenverbindungsabschnitt (42a) und einen Anschlussverbindungsabschnitt (42b) aufweist, wobei der Anschlussverbindungsabschnitt (42b) im Wesentlichen parallel zu der Deckelplatte (31) ist und ein Loch (42c) aufweist und das Kurzschlusselement (28) vertikal oberhalb des Lochs (42c) angeordnet ist.

15. Die Batterie nach einem der vorangehenden Ansprüche, wobei das Kurzschlusselement (28) wenigstens eines der folgenden Gruppe von Merkmalen aufweist:
zwischen der Deckelplatte (31) und dem unteren Isolierelement (46) angeordnet zu sein,
zwischen der Deckelplatte (31) und dem unteren Isolierelement (46) presseingepasst zu sein und
oberhalb eines unteren Isolierelementlochs (46d) angeordnet zu sein.

## Revendications

1. Batterie rechargeable (101) comprenant :
un ensemble d'électrodes (10) ayant une première électrode (12), une deuxième électrode (11) et un séparateur (13) interposé entre les première et deuxième électrodes (12, 11) ;
un boîtier (29) recevant l'ensemble d'électrodes (10) dans celui-ci ;
un ensemble de capuchon (30) attaché au boîtier (29) et comportant une plaque de capuchon (31) ;
une première borne (24) s'étendant à travers la plaque de capuchon (31) et connectée électriquement à la première électrode (12) ;
un élément isolant inférieur (46) prévu en dessous de la plaque de capuchon (31) ; et
un élément de court-circuit (28) connecté électriquement à la deuxième électrode (11) ;
où la première borne (24) comprend des premières parties de fixation (24b) connectées électriquement à la première électrode (12) ; et où
l'élément de court-circuit (28) est prévu en dessous d'un trou de court-circuit (31a) formé dans la plaque de capuchon (31),
**caractérisée en ce que** :
l'élément de court-circuit (28) est prévu entre la première borne (24) et l'élément isolant inférieur (46).

2. Batterie de la revendication 1, dans laquelle la première borne (24) comprend une partie de support supérieure en forme de plaque (24a) qui comprend :
un premier trou de borne (24d) à travers lequel s'étend une borne de connexion (22), et/ou
une protubérance de court-circuit (24c) faisant saillie vers le bas à partir de la partie de support supérieure (24a) à travers la plaque de capuchon (31).

3. Batterie de l'une des revendications précédentes, dans laquelle un élément isolant supérieur (26) est prévu entre la première borne (24) et la plaque de capuchon (31).

4. Batterie de la revendication 3, dans laquelle l'élément isolant supérieur (26) comprend :
une partie en forme de plaque (26a) ;
des deuxièmes trous d'élément isolant supérieur (26d) pour l'insertion des premières parties de fixation (24b) ; et
des deuxièmes protubérances isolantes (26f) formées autour des deuxièmes trous d'élément isolant supérieur (26d) pour isoler les premières parties de fixation (24b) de la plaque de capuchon (31).

5. Batterie des revendications (3 et 2) ou des revendications (4 et 2), dans laquelle l'élément isolant supérieur (26) comprend :
un premier trou d'élément isolant supérieur (26c) dans lequel la protubérance de court-circuit (24c) est insérée ; et
une première protubérance isolante (26e) formée entre la protubérance de court-circuit (24c) et la surface interne du trou de court-circuit (31a).

6. Batterie de la revendication 5, dans laquelle la première protubérance isolante (126e) comporte deux arcs espacés à un intervalle prédéterminé et l'élément isolant supérieur (126) comprend en outre :
une partie de support (126f) croisant le premier trou d'élément isolant supérieur (126c), et
des trous de tampon (126d) formés entre la première protubérance isolante (126e) et la partie en forme de plaque (126a).

7. Batterie de l'une des revendications précédentes, dans laquelle une plaque de support (48) est prévue en dessous de la plaque de capuchon (31) entre un élément collecteur de courant (42) et l'élément isolant inférieur (46).

8. Batterie de la revendication 7, dans laquelle la plaque de support (48) comprend un premier trou de plaque de support (48b) en dessous de l'emplacement de l'élément de court-circuit (28) et des deuxièmes trous de plaque de support (48a) pour l'insertion des premières parties de fixation (24b) et/ou pour riveter les premières parties de fixation (24b) à la plaque de support (48).

9. Batterie de l'une des revendications précédentes 1 à 6, comprenant en outre un élément collecteur de courant (42), où les premières parties de fixation (224b) s'étendent à travers l'élément collecteur de courant (42) et sont rivetées à l'élément collecteur de courant (42).

10. Batterie de l'une des revendications 7 à 9, dans laquelle l'élément de court-circuit (28) communique avec l'intérieur de la batterie (101) par l'intermédiaire du trou d'élément isolant inférieur (46d), d'un trou d'élément collecteur de courant (42c) formé dans l'élément collecteur de courant (42) et/ou du trou de plaque de support (48c).

11. Batterie de l'une des revendications précédentes, dans laquelle l'élément de court-circuit (28) est :
adapté pour être déformé vers le haut lorsque la pression interne dans la batterie (101) s'élève au-dessus d'un premier niveau de pression, et/ou
espacé de la première borne (24) à une pression interne dans la batterie (101) en dessous d'un premier niveau de pression et entre en contact avec la première borne (24) au-dessus du premier niveau de pression à l'intérieur de la batterie (101) court-circuitant ainsi les première et deuxième électrodes (11, 12).

12. Batterie de l'une des revendications 2 à 10, dans laquelle, à une pression interne dans la batterie (101) au-dessus d'un premier niveau de pression, l'élément de court-circuit (28) entre en contact avec la protubérance de court-circuit (24c) faisant saillie à partir de la première partie de plaque de borne (24a) ou à partir de la borne de connexion (422) de la première borne (422).

13. Batterie de l'une des revendications précédentes, dans laquelle les premières parties de fixation (24b) s'étendent à travers la plaque de capuchon (31) et l'élément isolant inférieur (46) depuis le dessus.

14. Batterie de l'une des revendications précédentes, dans laquelle l'élément collecteur de courant (42) comprend une partie de connexion d'électrode (42a) et une partie de connexion de borne (42b), où la partie de connexion de borne (42b) est essentiellement parallèle à la plaque de capuchon (31) et comprend un trou (42c) et l'élément de court-circuit (28) est placé verticalement au-dessus du trou (42c).

15. Batterie de l'une des revendications précédentes, dans laquelle l'élément de court-circuit (28) comprend au moins l'une du groupe de caractéristiques suivant :
est placé entre la plaque de capuchon (31) et l'élément isolant inférieur (46),
est ajusté par pression entre la plaque de capuchon (31) et l'élément isolant inférieur (46), et
est placé au-dessus d'un trou d'élément isolant inférieur (46d).
